# EUROPÄISCHE PATENTANMELDUNG

(11) **EP 1 258 390 A1**
(43) Veröffentlichungstag der Anmeldung: **20.11.2002**
(21) Anmeldenummer: 02010321.4
(22) Anmeldetag: 07.05.2002
(51) Int. Cl.: B60N 2/36, B60N 2/68, B60R 21/02

(54) **Sitzlehneneinrichtung für ein Kraftfahrzeug**

(30) Priorität: 15.05.2001 DE 10123692
(71) Anmelder: Bayerische Motoren Werke Aktiengesellschaft, 80788 München (DE)
(72) Erfinder: Ehrbar, Günter, 82110 Germering (DE); Graber, Ulrich, 85307 Paunzhausen (DE); Lein, Rudolf, 80939 München (DE); Klühspies, Roland, 97199 Ochsenfurt (DE); Messner, Manfred, 80469 München (DE)

(57) **Zusammenfassung**

Die Erfindung betrifft eine feststehende Sitzlehneneinrichtung, insbesondere zum Einbau in ein Kraftfahrzeug mit einem unmittelbar hinter der Sitzlehneneinrichtung angeordneten Gepäckraum. Das Kraftfahrzeug weist zum Schutz der Insassen vor verrutschender Ladung eine Ladegutschutzeinrichtung auf, die eine Tragstruktur (1) sowie Mittel (4) zu Aufnahme und Umwandlung kinetischer Energie und zur Kräfteableitung umfasst.

Erfindungsgemäß werden sowohl die Tragstruktur (1) als auch die Mittel (4) zu Energieaufnahme, Energiewandlung und Kräfteableitung in die feststehende Sitzlehneneinrichtung integriert. Durch den damit ermöglichten Entfall der im Kraftfahrzeug als Ladegutschutz bisher notwendigen Metalltrennwand lässt sich die Anzahl der vorzuhaltenden Karosserievarianten innerhalb einer Fahrzeugbaureihe reduzieren.

## Beschreibung

Die Erfindung betrifft eine feststehende Sitzlehneneinrichtung für ein Kraftfahrzeug nach dem Oberbegriff des Patentanspruchs 1.

Sitzlehneneinrichtungen der eingangs genannten Art kommen - im Unterschied zu den umklappbaren Sitzlehneneinrichtungen - häufig insbesondere in Kraftfahrzeugen der Karosserieform "Limousine" bzw. "Stufenheck" zum Einsatz, die einen formal sowie konstruktiv von der Fahrgastzelle abgetrennten Gepäckraum aufweisen. Weiter sind die gattungsgemäßen Sitzlehneneinrichtungen vorwiegend, jedoch keineswegs ausschließlich den Rücksitzen bzw. der Rücksitzbank eines Kraftfahrzeugs zugeordnet.

Der Gepäckraum eines Kraftfahrzeugs der Stufenheckbauart schließt sich im allgemeinen unmittelbar hinter den Rücksitzlehnen bzw. unmittelbar hinter der Lehne der Rücksitzbank des Kraftfahrzeugs an. Um insbesondere die Insassen auf den Rücksitzen oder auf der Rücksitzbank solcher Fahrzeuge vor den Auswirkungen von im Gepäckraum verrutschenden Gegenständen, besonders vor Verletzungen durch die bei einem Aufprall des Fahrzeugs nach vorne geschleuderten Gepäckstücke zu schützen, weisen solche Kraftfahrzeuge eine Ladegutschutzeinrichtung auf, die verhindern soll, dass bei einem Aufprall oder beim starken Bremsen etwa nach vorne geschleuderte Gepäckstücke oder andere im Gepäckraum untergebrachte schwere Gegenstände die Lehnen der Rücksitze verformen oder gar durch die Sitzlehnen in die Passagierzelle eindringen und zu von Passagieren Verletzungen führen.

Eine wirksame Ladegutschutzeinrichtung muss demnach Mittel zur Aufnahme der kinetischen Energie der nach vorne geschleuderten Gegenstände umfassen, sie muss weiterhin imstande sein, die unter Abbremsung der Gegenstände aufgenommene kinetische Energie abzubauen, das heißt im allgemeinen in Wärme umzuwandeln, und sie muss ferner Mittel zur Ableitung der bei Energieaufnahme und Energiewandlung entstehenden Kräfte in die Karosseriestruktur umfassen. Bekannte Ladegutschutzeinrichtungen gattungsgemäßer Kraftfahrzeuge liegen in Form von Metalltrennwänden vor, die zwischen der vorderen Begrenzung des Gepäckraums und dem Innenraum des Kraftfahrzeugs angeordnet sind.

Mit anderen Worten sind die bekannten Metalltrennwände zum Schutz der Insassen vor verrutschender bzw. nach vorne geschleuderter Ladung bei den Kraftfahrzeugen der Stufenheckbauart im wesentlichen unmittelbar hinter den Rücksitzlehnen flächenartig etwa vertikal angeordnet und erstrecken sich über die gesamte Breite des Fahrzeuginnenraums. Die bekannten Metalltrennwände bilden bei diesen Kraftfahrzeugen einen integralen Bestandteil der Fahrzeugkarosserie und sind mit der Karosserie fest verbunden, das heißt im allgemeinen verschweißt oder verschraubt. In Fahrtrichtung unmittelbar vor einer solchen Trennwand schließen sich im allgemeinen die Bestandteile der Polsterung der Rücksitzlehnen wie beispielsweise Schaumstoffe, Polstermaterialien, Drahtrahmen, Dämmstoffe, oder auch Funktionsbauteile, wie beispielsweise herausklappbare Mittelarmlehnen an.

Nachteilig bei dieser im Stand der Technik bekannten Bauweise ist jedoch, dass sich die Anzahl der Karosserievarianten mit der nur für bestimmte Karosserieformen und Fahrzeugbauarten als Ladegutschutzeinrichtung notwendigen bzw. einsetzbaren Metalltrennwand erhöht und dadurch die Vereinheitlichung von Karosserievarianten erschwert wird. So ist die Metalltrennwand als Ladegutschutzeinrichtung im wesentlichen lediglich bei solchen Fahrzeugen der Stufenheckkategorie einsetzbar, die nicht mit umklappbaren Rücksitzlehnen ausgestattet sind. Bereits bei denjenigen Fahrzeugen mit Stufenheckkarosserie, die mit umklappbaren Rücksitzlehnen ausgestattet werden sollen, muss die Funktion des Ladegutschutzes auf andere Weise erbracht, beispielsweise herausnehmbar oder zusammen mit den Rücksitzlehnen umklappbar ausgeführt werden.

Dies führt selbst innerhalb einer Stufenheckbaureihe zur Notwendigkeit, im Rohbau mehrere Karosserievarianten vorzusehen, nämlich Rohkarosserien mit Metalltrennwand für die Basisausführungen der Stufenheckvariante, und Rohkarosserien ohne Metalltrennwand für die Fahrzeugausführungen der Stufenheckvariante mit umklappbaren Rücksitzlehnen. Auch für Fahrzeuge mit Steilheck, Schrägheck oder bei Varianten, die einen mit der Passagierzelle konstruktiv zusammengefassten Gepäckraum aufweisen (insbesondere Kombinations- bzw. Touringausführungen), welche in den meisten Fällen bereits in der Basisausstattung umklappbare Rücksitzlehnen aufweisen, müssen solche Karosserievarianten vorgehalten und verwendet werden, die ohne eine Metalltrennwand auskommen.

Durch die nur für einige der Varianten einer Kraftfahrzeugbaureihe als Ladegutschutzeinrichtung einsetzbare Metalltrennwand ergibt sich weiterhin auch ein zusätzlicher logistischer sowie fertigungstechnischer Steuerungsaufwand, ferner sind die entsprechenden Unterschiede bei der Fahrzeugmontage sowie bei der Fahrzeuginnen- und Gepäckraumverkleidung zu berücksichtigen. Im Ergebnis werden durch die Verwendung von karosseriefesten Metalltrennwänden als Ladegutschutzeinrichtung in den unterschiedlichsten Bereichen, beginnend mit Fahrzeugentwicklung, über Logistik, Fertigung und Montage bis hin zum Ersatzteilbereich nicht unerhebliche Aufwände und damit Kosten verursacht.

Ausgehend von diesem Stand der Technik ist es die Aufgabe der vorliegenden Erfindung, eine feststehende Sitzlehneneinrichtung für ein Kraftfahrzeug zu schaffen, durch deren Einsatz in einer Kraftfahrzeugbaureihe die Anzahl der Karosserievarianten der Baureihe mittels Entfall der bisher zum Ladegutschutz notwendigen Metalltrennwand reduziert werden kann.

Diese Aufgabe wird durch eine feststehende Sitzlehneneinrichtung nach der Lehre des Patenanspruchs 1 gelöst.

Es ist eine weitere Aufgabe der Erfindung, ein Kraftfahrzeug zu schaffen, bei dem unabhängig von der Ausstattung mit feststehenden oder umklappbaren Rücksitzlehnen im wesentlichen ein und dieselbe Rohkarosserieausführung ohne Metalltrennwand verwendet werden kann, und bei dem durch die entfallene Metalltrennwand Kosten in Konstruktion und Entwicklung des Kraftfahrzeugs, bei Fertigung, Montage und Innenverkleidung sowie in den Bereichen Logistik und Lagerhaltung eingespart werden können.

Diese Aufgabe wird durch ein Kraftfahrzeug nach der Lehre des Patenanspruchs 13 gelöst.

Vorteilhafte Ausgestaltungen der Erfindung sind Gegenstand der Unteransprüche.

Die Sitzlehneneinrichtung gemäß der Erfindung ist vorzugsweise für den Einsatz in einem Kraftfahrzeug, insbesondere in einem Kraftfahrzeug der Stufenheckbauart vorgesehen, wobei das Kraftfahrzeug in an sich bekannter Weise eine Ladegutschutzeinrichtung zum Schutz der Insassen vor verrutschender oder nach vorne geschleuderter Ladung aufweist. Die Ladegutschutzeinrichtung umfasst dabei eine Trägerstruktur sowie Mittel zur Aufnahme kinetischer Energie aufprallender Ladungsgegenstände, Mittel zur Umwandlung der aufgenommenen kinetischen Energie in Wärmeenergie sowie Mittel zur Einleitung der bei Energieaufnahme und Umwandlung entstehenden Kräfte in die Karosseriestruktur.

Gemäß der Erfindung ist hierzu jedoch keine karosseriefeste Metalltrennwand erforderlich, vielmehr lassen sich Trägerstruktur sowie die Mittel zu Energieaufnahme, Energiewandlung und Kräfteableitung in Form einer Sicherungsanordnung erfindungsgemäß in die feststehende Sitzlehneneinrichtung des Kraftfahrzeugs integrieren. Der damit verbundene Entfall der karosseriefesten Metalltrennwand ermöglicht die Verwendung einer im wesentlichen einheitlichen Karosserievariante für alle Stufenheckausführungen einer Kraftfahrzeugbaureihe, seien sie mit feststehenden Rücksitzlehnen, mit teilweise aus- bzw. umklappbaren Rücksitzlehnen oder mit in Gesamtheit umklappbaren Rücksitzlehnen ausgestattet.

Gemäß einer besonders bevorzugten Ausführungsform der Erfindung besteht die in die Sitzlehneneinrichtung des Kraftfahrzeugs integrierte Tragstruktur im wesentlichen aus einem Polymerwerkstoff, insbesondere aus einem Faserverbundwerkstoff. Der Polymer- bzw. Faserverbundwerkstoff der Tragstruktur bildet dabei ein im wesentlichen eben flächiges bzw. als profilierte Raumfläche ausgebildetes Formteil. Die Herstellung der Tragstruktur der Sitzlehneneinrichtung aus einem insbesondere faserverstärkten Polymerwerkstoff ist vorteilhaft gegenüber metallischen Werkstoffausführungen bezüglich der erzielbaren Gewichtseinsparung bei gleichzeitig hoher Formsteifigkeit, im Hinblick auf eine verbesserte Wärme- und Geräuschdämmung sowie in Bezug auf die ermöglichte konstruktive und gestalterische Freiheit bei Formgebung und Wandstärken des Bauteils.

Bevorzugt umfasst die Tragstruktur der Sitzlehneneinrichtung Verstärkungsprofile, die mit dem Formteil der Tragstruktur verbindbar, dabei insbesondere zumindest teilweise in den Polymerwerkstoff des Formteils einlaminierbar bzw. einbettbar sind. Mit Hilfe der mit dem Formteil verbindbaren bzw. in das Formteil einbettbaren Verstärkungsprofile lässt sich die Widerstandsfähigkeit bzw. Formsteifigkeit der Tragstruktur der Sitzlehneneinrichtung an besonders hoch beanspruchten Stellen weiter erhöhen, und es wird die Möglichkeit geschaffen, hochfeste Verbindungen mit weiteren Bauteilen bzw. mit der Karosseriestruktur des Kraftfahrzeugs auf einfache Weise herzustellen.

Auf welche Weise die Sicherungsanordnung mit Mitteln zu Energieaufnahme, Energiewandlung sowie Kräfteableitung konstruktiv in die Sitzlehneneinrichtung integriert wird, ist erfindungsgemäß solange beliebig, als sich die Insassen des Fahrzeugs mit der Sicherungsanordnung trotz Entfalls der Metalltrennwand wirksam vor Auswirkungen verrutschender bzw. nach vorne geschleuderter Ladung schützen lassen. Besonders vorteilhaft ist es jedoch, wenn die Sicherungsanordnung zum Schutz der Fahrzeuginsassen unmittelbar an der Tragstruktur der Sitzlehneneinrichtung befestigbar, insbesondere an die Verstärkungsprofile der Tragstruktur anschraubbar oder mit den Verstärkungsprofilen vernietbar ist. Auf diese Weise wird eine unmittelbare Aufnahme und Einleitung der kinetischen Energie verrutschender Ladung in die Sicherungsanordnung der Sitzlehneneinrichtung gewährleistet.

Gemäß einer vorteilhaften Ausführungsform der Erfindung weist die Tragstruktur der Sitzlehneneinrichtung weiterhin an zumindest einer Seitenkante des im wesentlichen flächigen Formteils, und zwar vorzugsweise an der im Einbauzustand nach unten weisenden Seitenkante, zumindest einen Vorsprung auf, der ein Stück weit über den Rand des Formteils hinausragt. Der über den Rand des Formteils hinausragende Vorsprung besitzt dabei eine langgestreckte Form, die insbesondere im wesentlichen prismatisch ausgebildet sein kann. Bevorzugt wird der Vorsprung dadurch gebildet, dass ein Verstärkungsprofil der Tragstruktur der Sitzlehneneinrichtung ein Stück weit über den Rand des im wesentlichen flächigen Formteils der Tragstruktur hinausragt.

Einer bzw. mehrere solcher vorzugsweise an der unteren Kante der Sitzlehneneinrichtung angeordneter langgestreckter Vorsprünge dienen der einfachen Befestigung bzw. Verankerung der Sitzlehneneinrichtung an der Karosseriestruktur eines Kraftfahrzeugs, beispielsweise indem der oder die Vorsprünge mit am Fahrzeug angeordneten, zu den Vorsprüngen formkorrespondierenden Ausnehmungen in Eingriff gebracht werden.

Gemäß einem besonders bevorzugten Ausführungsbeispiel der Erfindung bestehen die beispielsweise in das Formteil der Tragstruktur einbettbaren Verstärkungsprofile der Sitzlehneneinrichtung im wesentlichen aus Metall. Als Material zur Herstellung der Verstärkungsprofile findet dabei vorzugsweise Aluminium oder Stahl Verwendung. Der Einsatz metallischer Werkstoffe, insbesondere von Aluminium oder Stahl für Verstärkungsprofile der Tragstruktur der Sitzlehneneinrichtung erhöht nicht nur die Formsteifigkeit der Tragstruktur, sondern auch die sicherheitsrelevante Fähigkeit zu zusätzlich energieverzehrenden Verformung der Tragstruktur im Fall eines Aufpralls von Ladungsgegenständen.

Gemäß einem besonders bevorzugten Ausführungsbeispiel der Erfindung umfasst die Sicherungsanordnung zum Schutz der Fahrzeuginsassen vor verrutschender Ladung Mittel zur Aufnahme und Umwandlung kinetischer Energie in Form eines Deformationsbereichs. Mit einem erfindungsgemäß in die Sicherungsanordnung der Sitzlehneneinrichtung integrierten Deformationsbereich lässt sich im Dienst der Sicherheit konstruktiv weitgehend vorherbestimmen, in welchen Bereichen und durch welche Elemente der wesentliche Teil der kinetischen Energie verrutschender Ladung aufgenommen und durch Deformation in Wärmeenergie umgewandelt werden soll.

Gemäß einem bevorzugten Ausführungsbeispiel der Erfindung umfasst die Sicherungsanordnung der Sitzlehneneinrichtung weiterhin zumindest ein Schließelement, mit dem die bei Energieaufnahme und Energiewandlung anfallenden Kräfte aufgenommen und in die Karosseriestruktur des Kraftfahrzeugs eingeleitet werden können. Das Schließelement der Sicherungsanordnung ist dabei bevorzugt unmittelbar mit einem Verankerungselement in Eingriff bringbar, das im wesentlichen starr mit der Karosserie des Kraftfahrzeugs verbunden ist. Das Schließelement der Sicherungsanordnung und das mit der Karosserie des Kraftfahrzeugs verbundene Verankerungselement kann dabei beispielsweise so ausgebildet sein, dass eine schnelle und einfache Montage der Sitzlehneneinrichtung beispielsweise durch Einschnappen des Schließelements in das Verankerungselement ermöglicht wird.

Gemäß einem besonders bevorzugten Ausführungsbeispiel der Erfindung weist die Sicherungsanordnung zum Schutz der Fahrzeugpassagiere vor den Einwirkungen unkontrolliert verrutschender Ladung zumindest ein im wesentlichen einstückig aufgebautes Beschlagelement auf, das jeweils zumindest einen Deformationsbereich, ein Schließelement und zumindest einen Befestigungsbereich zur Befestigung des Beschlagelements an der Tragstruktur der Sitzlehneneinrichtung umfasst. Auf diese Weise lassen sich konstruktiv einfach sowie kostengünstig wesentliche Funktionen der Sicherungsanordnung in einem im wesentlichen einstückigen Bauteil zusammenfassen. Das im wesentlichen einstückige Beschlagelement nimmt über den zumindest einen Befestigungsbereich kinetische Energie verrutschender Gegenstände auf, leitet die kinetische Energie in den Deformationsbereich ein, wo sie mittels Deformation in Wärmeenergie umgewandelt werden kann, und leitet die dabei anfallenden Kräfte in das Schließelement ein, von wo sie in das entsprechende, an der Karosserie befestigte Verankerungselement und damit in die Karosserie des Kraftfahrzeugs eingeleitet werden können. Dabei besteht das die Funktionen Befestigung, Energieaufnahme, Energiewandlung und Kräfteableitung umfassende Beschlagelement der Sicherungsanordnung vorzugsweise im wesentlichen aus Metall, insbesondere aus Stahl.

Bevorzugte Anwendung findet die erfindungsgemäße Sitzlehneneinrichtung bei Kraftfahrzeugen, insbesondere bei Kraftfahrzeugen der Bauart "Stufenheck" bzw. "Limousine". So betrifft die Erfindung weiter ein Kraftfahrzeug mit einer feststehenden Sitzlehneneinrichtung und mit einem hinter der Sitzlehneneinrichtung angeordneten Gepäckraum, wobei das Kraftfahrzeug zum Schutz der Insassen vor verrutschender Ladung in an sich bekannter Weise eine Ladegutschutzeinrichtung aufweist. Die Ladegutschutzeinrichtung umfasst eine Tragstruktur sowie Mittel zu Energieaufnahme, Energiewandlung und Kräfteableitung. Erfindungsgemäß zeichnet sich das Kraftfahrzeug dadurch aus, dass die Tragstruktur sowie die Mittel zu Energieaufnahme, Energiewandlung und Kräfteableitung in Form einer Sicherungsanordnung in die feststehende Sitzlehneneinrichtung integriert sind. Die bei gattungsgemäßen Kraftfahrzeugen bisher als Ladegutschutzeinrichtung notwendige Metalltrennwand kann daher entfallen und es können die bisher separat vorzuhaltenden unterschiedlichen Rohkarosserievarianten zusammengeführt und kostensparend vereinheitlicht werden.

Im folgenden wird die Erfindung anhand lediglich ein Ausführungsbeispiel darstellender Zeichnungen näher erläutert. Es zeigt
- **Fig. 1**: in schematischer, perspektivischer Darstellung ein Ausführungsbeispiel für eine Tragstruktur einer feststehenden Sitzlehneneinrichtung für ein Kraftfahrzeug gemäß der vorliegenden Erfindung; und
- **Fig. 2**: ein Ausführungsbeispiel für ein Beschlagelement einer Sicherungsanordnung für eine Sitzlehneneinrichtung gemäß der vorliegenden Erfindung.

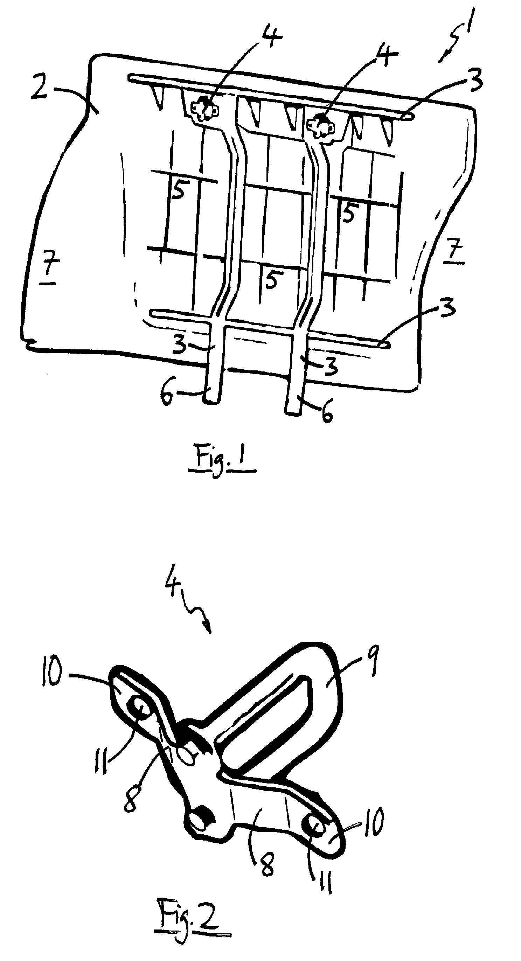

**Fig. 1** zeigt die Tragstruktur 1 einer feststehenden Sitzlehneneinrichtung für ein Kraftfahrzeug gemäß der vorliegenden Erfindung, wie sie sich etwa aus der Blickrichtung durch die gedachte Fahrertür eines Kraftfahrzeugs darstellen würde. Die Tragstruktur 1 umfasst dabei ein aus einem Polymerwerkstoff, beispielsweise aus einem glasfaserverstärkten Polyurethanwerkstoff hergestelltes Formteil 2, eine Anzahl von mit dem Formteil 2 verbundenen Verstärkungsprofilen 3 sowie zwei Sicherungsanordnungen 4. Das aus einem glasfaserverstärkten Polyurethanwerkstoff hergestellte, im wesentlichen flächige Formteil 2 ist zur Versteifung und Entdröhnung mit einer Verrippung 5 versehen. Die Verstärkungsprofile 3 liegen in Form von Vierkantrohren aus Stahl oder Aluminium vor, die an Knotenpunkten miteinander verbunden, beispielsweise miteinander verschweißt sind. Die miteinander verbundenen Verstärkungsprofile 3 sind mit dem glasfaserverstärkten Polyurethan-Formteil 2 fest verbunden, insbesondere in den Werkstoff des Formteils 2 einlaminiert bzw. eingebettet.

Am unteren Rand der dargestellten Tragstruktur 1 der erfindungsgemäßen Sitzlehneneinrichtung weisen die beiden vertikal verlaufenden Verstärkungsprofile 3 jeweils einen Überstand 6 auf. Mittels der beiden Überstände 6 lässt sich die Tragstruktur der Sitzlehneneinrichtung auf einfache Weise mit der Karosseriestruktur des Kraftfahrzeugs verbinden, indem die überstehenden Enden 6 der vertikal verlaufenden Verstärkungsprofile 3 mit zu den überstehenden Enden 6 formkorrespondierend ausgebildeten Ausnehmungen in der Karosseriestruktur des Fahrzeugs in Eingriff gebracht bzw. in diese formkorrespondierenden Ausnehmungen eingesteckt werden. Die beiden gewölbt ausgeformten Bereiche 7 des Formteils 2 dienen der Aufnahme bzw. teilweisen Abdeckung der sich an dieser Stelle in die Fahrgastzelle erstreckenden Radhäuser der Hinterräder des Kraftfahrzeugs.

Weiterhin umfasst die dargestellte Tragstruktur 1 der Sitzlehneneinrichtung des Kraftfahrzeugs erfindungsgemäß zwei Sicherungsanordnungen 4, die mit den Verstärkungsprofilen 3 verbunden sind. Die Sicherungsanordnungen 4 dienen der Aufnahme von kinetischer Energie, die von verrutschender Ladung bei einem Aufprall des Kraftfahrzeugs auf ein Hindernis oder beim starken Bremsen auf die Tragstruktur der Sitzlehneneinrichtung übertragen wird, weiterhin der Umwandlung der aufgenommenen kinetischen Energie in Wärmeenergie sowie der Einleitung der dabei entstehenden Kräfte in die Karosseriestruktur des Kraftfahrzeugs.

In **Fig. 2** ist ein Ausführungsbeispiel einer Sicherungsanordnung 4 gemäß der vorliegenden Erfindung in schematischer, perspektivischer Detailansicht dargestellt. Die Sicherungsanordnung 4 liegt im dargestellten Ausführungsbeispiel in Form eines im wesentlichen einteiligen Beschlagelements 4 vor, das einstückig Deformationsbereiche 8, ein Schließelement in Form eines U-förmigen Bügels 9 sowie zwei Befestigungsbereiche 10 mit jeweils einer Befestigungsbohrung 11 umfasst. Mittels der Befestigungsbohrungen 11 ist das Beschlagelement 4 über seine Befestigungsbereiche 10 mit der Tragstruktur der Sitzlehneneinrichtung verbindbar, insbesondere mit den Verstärkungsprofilen 3 der Tragstruktur 1 vernietbar oder verschraubbar.

Das durch den U-förmigen Bügel 9 gebildete Schließelement des Beschlagelements 4 lässt sich beim Einbau der Sitzlehneneinrichtung in das Kraftfahrzeug mit einem formkorrespondierend ausgebildeten nichtdargestellten Verriegelungselement in Eingriff bringen, wobei das Verriegelungselement fest mit der Karosseriestruktur des Kraftfahrzeugs verbunden ist. Um eine besonders schnelle, einfache und damit kostengünstige Montage der Sitzlehneneinrichtung im Kraftfahrzeug zu ermöglichen, sind die karosseriefesten Verriegelungselemente vorzugsweise so ausgebildet, dass das durch den U-förmigen Bügel 9 gebildete Schließelement des Beschlagelements 4 in das Verriegelungselement einrastbar bzw. einschnappbar ist. Die Montage einer komplett vormontierten Rücksitzlehne einschließlich Polsterung, Bezug sowie rückseitiger Verkleidungsumfänge und einschließlich der erfindungsgemäß in die Rücksitzlehne integrierten Tragstruktur mit Sicherungsanordnung gestaltet sich somit schnell und sehr einfach. Es müssen lediglich in einem ersten Arbeitsgang die überstehenden Enden der vertikal verlaufenden Verstärkungsprofile 3 in die entsprechenden Ausnehmungen der Karosserie des Kraftfahrzeugs eingeführt werden; danach kann in einem zweiten Arbeitsgang durch einfaches Verschwenken der Rückenlehne um die in den Ausnehmungen der Karosserie steckenden Überstände 6, bis zum Einrasten der U-förmigen Schließelemente 9 in den entsprechenden karosseriefesten Verriegelungselementen, die gesamte Rückenlehne fest mit der Karosseriestruktur des Kraftfahrzeugs verbunden werden.

Beim starken Bremsen bzw. bei einem Aufprall des Kraftfahrzeugs auf ein Hindernis nach vorne geschleuderte Ladung prallt aufgrund ihrer Massenträgheit von hinten auf die Rücksitzlehnen. Dabei wird die kinetische Energie der aufprallenden Gegenstände über die Struktur des glasfaserverstärkten Formteils 2 auf die Verstärkungsprofile 3 und von dort auf die mit den Verstärkungsprofilen 3 verbundenen Sicherungsanordnungen bzw. Beschlagelemente 4 übertragen. Durch definierte Verformung der Deformationsbereiche 8 der Beschlagelemente 4 wird die aufgenommene kinetische Energie in Wärme umgewandelt. Die auftretenden Kräfte werden über die durch die U-förmigen Bügel 9 gebildeten Schließelemente der Sicherungsanordnungen 4 auf die karosseriefesten, nicht eigens dargestellten Verriegelungselemente übertragen und damit in die Karosseriestruktur eingeleitet.

Dank der erfindungsgemäß in die Sitzlehneneinrichtung eines Kraftfahrzeugs integrierbaren Sicherungsanordnung mit Ladegutschutzfunktion wird es demnach ermöglicht, die bisher unterschiedlichen Karosserievarianten einer Stufenheckausführung eines Kraftfahrzeugs zu vereinheitlichen; es kann ein und dieselbe Rohkarosserieausführung verwendet werden, unabhängig davon, ob das jeweilige Fahrzeug eine feststehende oder eine umklappbare Rücksitzlehne erhalten soll.

## Patentansprüche

1. Feststehende Sitzlehneneinrichtung für ein Kraftfahrzeug, wobei das Kraftfahrzeug einen hinter der Sitzlehneneinrichtung angeordneten Gepäckraum sowie eine Ladegutschutzeinrichtung mit einer Tragstruktur und mit Mitteln zu Energieaufnahme, Energiewandlung sowie Kräfteableitung zum Schutz der Insassen vor verrutschender Ladung umfasst,
**dadurch gekennzeichnet,**
**dass** die Tragstruktur (1) sowie die Mittel zu Energieaufnahme, Energiewandlung und Kräfteableitung in Form einer Sicherungsanordnung (4) in die feststehende Sitzlehneneinrichtung integrierbar sind.

2. Sitzlehneneinrichtung nach Anspruch 1,
**dadurch gekennzeichnet,**
**dass** die in die Sitzlehneneinrichtung integrierte Tragstruktur (1) im wesentlichen aus einem Polymerwerkstoff, insbesondere einem Faserverbundwerkstoff besteht, der in Form einer im wesentlichen ebenen Fläche oder als profilierte Raumfläche ausgeformt ist und so ein im wesentlichen flächiges Formteil (2) bildet.

3. Sitzlehneneinrichtung nach Anspruch 2,
**dadurch gekennzeichnet,**
**dass** die Tragstruktur (1) der Sitzlehneneinrichtung Verstärkungsprofile (3) umfasst, die mit dem Formteil (2) verbindbar, insbesondere zumindest teilweise in den Polymerwerkstoff des Formteils (2) einbettbar sind.

4. Sitzlehneneinrichtung nach einem der Ansprüche 1 bis 3,
**dadurch gekennzeichnet,**
**dass** die Sicherungsanordnung (4) an der Tragstruktur (1) unmittelbar befestigbar, insbesondere an Verstärkungsprofile (3) der Tragstruktur (1) anschraubbar oder mit den Verstärkungsprofilen (3) vernietbar ist.

5. Sitzlehneneinrichtung nach einem der Ansprüche 2 bis 4,
**dadurch gekennzeichnet,**
**dass** die Tragstruktur (1) an zumindest einer Seitenkante des im wesentlichen flächigen Formteils (2), vorzugsweise am nach unten weisenden Rand des Formteils (2), zumindest einen Vorsprung (6) aufweist, der ein Stück weit über den Rand des Formteils (2) hinausragt, wobei der Vorsprung (6) im wesentlichen langgestreckt ist, insbesondere eine im wesentlichen prismatische Gestalt besitzt.

6. Sitzlehneneinrichtung nach Anspruch 5,
**dadurch gekennzeichnet,**
**dass** der Vorsprung (6) durch ein Verstärkungsprofil (3) der Tragstruktur (1) gebildet wird, das sich ein Stück weit über den Rand des im wesentlichen flächigen Formteils (2) hinaus erstreckt.

7. Sitzlehneneinrichtung nach einem der Ansprüche 3 bis 6,
**dadurch gekennzeichnet,**
**dass** die Verstärkungsprofile (3) der Tragstruktur (1) im wesentlichen aus Metall, insbesondere aus Aluminium oder aus Stahl bestehen.

8. Sitzlehneneinrichtung nach einem der Ansprüche 1 bis 7,
**dadurch gekennzeichnet,**
**dass** die Sicherungsanordnung (4) zumindest einen
Deformationsbereich (8) zur Energieaufnahme und Energiewandlung umfasst.

9. Sitzlehneneinrichtung nach einem der Ansprüche 1 bis 8,
**dadurch gekennzeichnet,**
**dass** die Sicherungsanordnung (4) zumindest ein Schließelement (9) zur Kräfteableitung umfasst.

10. Sitzlehneneinrichtung nach Anspruch 9,
**dadurch gekennzeichnet,**
**dass** das Schließelement (9) der Sicherungsanordnung (4) mit einem Verankerungselement in Eingriff bringbar ist, wobei das Verankerungselement im wesentlichen starr mit der Karosserie des Kraftfahrzeugs verbunden ist.

11. Sitzlehneneinrichtung nach einem der Ansprüche 1 bis 10,
**dadurch gekennzeichnet,**
**dass** die Sicherungsanordnung (4) zumindest ein im wesentlichen einstückiges Beschlagelement aufweist, das jeweils zumindest einen Deformationsbereich (8), ein Schließelement (9) und zumindest einen Befestigungsbereich (10) umfasst.

12. Sitzlehneneinrichtung nach Anspruch 11,
**dadurch gekennzeichnet,**
**dass** das Beschlagelement der Sicherungsanordnung (4) im wesentlichen aus Metall, insbesondere aus Stahl besteht.

13. Kraftfahrzeug mit im wesentlichen feststehender Sitzlehneneinrichtung und mit einem hinter der Sitzlehneneinrichtung angeordneten Gepäckraum, wobei das Kraftfahrzeug zum Schutz der Insassen vor verrutschender Ladung eine Ladegutschutzeinrichtung aufweist, die eine Tragstruktur sowie Mittel zu Energieaufnahme, Energiewandlung und Kräfteableitung umfasst,
**dadurch gekennzeichnet,**
**dass** die Tragstruktur (1) sowie die Mittel zu Energieaufnahme, Energiewandlung und Kräfteableitung in Form einer Sicherungsanordnung (4) in die feststehende Sitzlehneneinrichtung integriert sind.
